# EUROPEAN PATENT APPLICATION

(11) **EP 2 677 235 A1**
(43) Date of publication of application: **25.12.2013**
(21) Application number: 12173275.4
(22) Date of filing: 22.06.2012
(51) Int. Cl.: F21V 5/02, F21K 99/00

(54) **LED lamp**

(71) Applicant: Hella KGaA Hueck & Co, 59552 Lippstadt (DE)
(72) Inventor: Kerpe, Alexander, 59555 Lippstadt (DE); Möller, Dennis, 59557 Lippstadt (DE)
(74) Representative: Lohr, Georg

(57) **Abstract**

A lamp with at least one support 5 for a row of light sources 10 and a front cover 20 in front of the light sources 10, wherein the front cover 20 has at least one primary surface structure 31, 32 forming a lens in the front cover, provides an at least almost constant light distribution even if the front cover and the support expand due to the heat produced by the operated light sources, if the primary surface structure 31, 32 has a columnar shape and extends parallel to the row of light sources 10.

## Description

### Field of the invention

The invention relates to a lamp with at least one support for at least one row of light sources and a front cover in front of the light sources, wherein the front cover has at least one primary surface structure forming a lens in the front cover.

### Description of the related art

LED lamps as well referred to as LED lights often have an elongated structure, for example the LED light disclosed in WO 2010/095710 A1. EP 2 184 779 and US2011/185609 each suggest a light with an elongated printed circuit board with LEDs mounted in rows. The LEDs are covered by a light-transmissive front cover. For each LED a lens is integrated in the front cover as a recess. Each of the recesses is a lens for a particular LED. These LED lights permit a high efficiency and low production costs due to the integration of the lenses in the front cover.

US 2009/0109667 A1 discloses an array of lenses, where each lens is positioned in front of a LED. The light entrance and the light exit surfaces of each lens, are cylinder lenses, each having a focal plane. The focal planes are orthogonal to each other and their intersection defines the optical axis of the respective lens. The cylinder lenses can be Fresnel lenses.

A different type of lamp is disclosed in the patent publication CN 101649991. LEDs are arranged on a support, wherein each LED is positioned in a truncated cone like reflector. In front of each reflector is a lens of a lens array. The lens array comprises a number of lenses, each with a LED facing light incident surface and a light exit surface. The light incident surfaces are concave and have a cylinder segment form. The cylinder axis defines a first direction. The light exit surface of the lens is convex and has as well a cylinder segment form. The cylinder axis of the convex surface defines a second direction, which is orthogonal to the first direction. In front of the lens array is a light transmissive plate with a light exit surface on which are prism like protrusions extending in the first direction.

EP 0874 964 B1 discloses a LED-light for signals, e.g., traffic signals. The light has printed circuit board to which LEDs are mounted in parallel rows. In front of the LED is a dome shaped cover plate with integrated lenses. Each lens has a LED facing surface with a first and second band like surface structures. The first and second bands extend adjacent to each other in parallel first and second planes, respectively. The longitudinal direction of the rows is parallel to the planes. The first band is curved in a direction perpendicular to the longitudinal direction of the rows. The curvature increases monotonically away from the second band. In the longitudinal direction of the rows, the first band is only slightly curved, forming a continuous dome spanning over the respective row of LEDs. The second band has ridges forming a row of parallel crest. The crests are orthogonal to the longitudinal direction of the row. The envelope of the crests in the direction of the row spans as well a dome.

### Summary of the invention

The invention is based on the observation that the light distribution of the LED lights of the above named prior art changes during operation of the light. The problem to be solved by the invention is to provide a cost efficient possibility to provide a light with a constant well defined light distribution.

Solutions of the problem are described in the independent claims. The dependent claims relate to further improvements of the invention.

The invention is based on the finding, that the heat of the light sources causes a thermal expansion of the front cover and the printed circuit board. Due to this expansion the recesses, i.e. the lenses, displace relative to the LEDs during operation. This displacement causes the observed changes in the light distribution. The lamp has at least one support for at least one row of light sources and a front cover in front of the light sources. The support can be a printed circuit board. The front cover has at least one primary surface structure forming a lens in the front cover. The primary surface structure may for example have the shape of a section of a column and extend parallel to the row of light sources, i.e., the column axis is parallel to or identical with the longitudinal axis, which is defined by the row of light sources. Thus, a thermal expansion of the front cover and/or the support when operating the light sources does not change or least not significantly change the light distribution in the direction of the row of light sou rces.

A significant difference between the invention and the prior art is that according to the prior art each light source is assigned to a lens of a lens array. Therefore, the lights sources dislocate due to thermal expansion of the support and/or lens arrays. According to the invention, however, a multitude of aligned light sources are assigned to a single common lens, the latter having a primary surface structure being translational invariant under a translation parallel to the row of light sources. The ripples of the secondary surface structure are repeated multiple times along the row of light sources. Thus, the effect of the thermal expansion of the lens and/or the support is extremely small and does not significantly change the light distribution. The primary surface structure, alternatively referred to as primary surface structure, is preferably superpositioned by the secondary surface structure. The superposition may be for example a linear combination of the first and secondary surface structures.

An additional difference to most of the prior art lights is that the LEDs of one row can be placed in any distance to each other. According the prior art, the positions of the LEDs are given by the optical axis of the respective lens of the lens array. In particular, if the lenses of the lens arrays refract the light towards the optical axis of the LED, the minimum distance between two LEDs was defined by twice the radius of the respective lenses. The only possibility to reduce the distance between two LEDs without losing efficiency was to place the respective lens as close as possible in front of the LED, as this reduces the minimum size of the lens. According to the invention, however, the lens is translational invariant along the direction defined by the row of lenses. Accordingly LEDs can be placed one immediately next to the other, if the thermal management allows for such a high density of LEDs on the support. Thus, the same front cover may be used to cover supports with different LED-configurations, e.g. a different numbers of equally spaced LEDs.

The light sources may be LEDs (light emitting diode), OLEDs or other light sources. For simplicity the term LED is used as an example for any light source.

Preferably the primary surface structure is a column like recess or protrusion in the light sources facing surface of the front cover. This permits a front cover with plane light exit surface.

For example may a column like recess enclose at least a section of the row at least partially. This permits the front cover to be positioned immediately on the support, and thereby a very efficient possibility to position the lens at a well defined distance to the LEDs. In addition the portion of the light emitted by the LEDs that can be coupled in the lens can be enhanced.

Preferably, the lens comprises secondary surface structures having the form of ridges with crests extending perpendicular to the direction of the row. These secondary surface structures permit to adapt the pattern of the light distribution in the direction of the row of LEDs to an intended light distribution. In particular, the ridges reduce the glare angle of the light in the direction along the row of light sources.

Preferably the mean distance between neighbored secondary surface structures is smaller than the mean distance between neighbored LEDs. For example may the (mean) distance between neighbored secondary surface structures, e.g. ridges, be smaller or equal to ¼ of the (mean) distance between the LEDs. The patterns in the light distribution due to the secondary surface structures will move, if the relative positions of the secondary surface structures changes due to heat expansion when operating the LEDs. However, due to the small distances between the secondary structures, the patterns themselves will remain at least approximately constant. The distance between a LED and any second LED in the row is preferably different from an integer multiple of the distance of the ridges. Thereby a repetitive light pattern with short period length can be avoided.

At least some of the secondary surface structures may be on and/or in the column like primary surface structure. In particular if the primary surface structure is a columnar recess in the LED facing surface of the cover plate and if the secondary surface structures are superpositioned on the primary surface structure, the efficiency of the lamp can be enhanced, as the amount of light being totally reflected by the front cover can be reduced.

The term column is to be understood to describe a 3D object with an arbitrary plane base, a translated copy of the base and a surface shell connecting the base and its translated copy. A columnar recess thus has a surface shell that is at least a section of the surface shell of a column. All cross sections of a column in a plane parallel to the base are congruent. A column is a generalization of a prism. Different from a prism, the base of a column is not necessarily a polygon.

Preferably at least a section of the surface of the column like primary surface structure may be invariant under a continuous translation parallel to the row of light sources. The section may be for example a segment of the lens between two subsequent secondary surface structures. If the section expands, the light pattern due to the respective section of the lens remains at least almost constant.

The light distribution of a light with a light source and a lens in front of the light source is described by the function of representation of the lens. Mathematically speaking the function of representation "maps" an image, e.g., of the light source to a surface at the other side of the lens. If the position of the light source relative to the lens is changed, the light distribution changes as well. The lens of the invention, however, has a surface or at least a section of a surface with a primary surface structure extending parallel to the row of light sources. The surface is for example columnar and thus translational invariant in a first direction, i.e., in the longitudinal direction of the column which coincides with the direction of the row of LEDs. Thus, the function of representation of the primary surface structure is invariant against a translation along the first direction. Therefore, a translation of a surface element of the lens due to a thermal expansion (or as well shrinking) in the first direction and relative to a light source will not change the light distribution of the light. Therefore, if the heat of the light source causes a displacement of a surface element of the lens relative to the light source in the first direction, the light distribution will remain at least almost constant.

The function of representation of the primary surface structure is referred to as primary or first function of representation. The primary surface structure could for example resemble a cylinder segment or a prism. Here the term prism is to be understood in its geometrical meaning: A prism is a polyhedron with a n-sided polygonal base, a translated copy and n other faces joining corresponding sides of the two bases.

In addition, the lens may preferably have a secondary surface structure with a secondary or second function of representation and wherein the (over all) function of representation of the lens is a superposition of at least the first and second functions of representation. The secondary surface structure is preferably not invariant under a continuous translation, however, may preferably be invariant under non continuous translations, e.g., along the first direction. The secondary surface structure may for example comprise at least essentially parallel ridges, where at least two of the ridges can preferably be mapped onto each other by a translation along the first direction, as example. These secondary surface structures permit a non homogeneous light distribution even along the first direction as explained above.

Preferably at least a light entry and/or exit surface of the lens has a surface being defined by a superposition of the primary surface structure and the secondary surface structure. In particular this permits very efficiently to reduce the amount of glare light. If the light entry surface of the lens has a surface being defined by a superposition of the primary surface structure and the secondary surface structure, the amount of light that can be coupled into the lens and thus directed in defined direction is enhanced.

For example, the lens may have as primary surface structure a concave elongated structure, e.g., a tunnel like columnar recess in its light entrance side. Thus, a translation of a LED along the longitudinal direction of the tunnel, this means along the first direction, will not change the light distribution. Secondary surface structures may be superimposed to the primary surface structure. Thus, the "tunnel surface" may have for example ridges extending preferably orthogonal to the first direction as secondary surface structures. The width and height of these ridges are preferably significantly smaller (≤1/3, preferably ≤1/5, more preferably ≤1/10) than the width and height of the primary surface structure. In particular, the primary surface structure may be a macro-optical structure and the secondary surface structure may be micro-optical structure. A micro-optical structure is an optical structure, having at least one dimension being only a few orders of magnitude bigger than the wavelength of the light.

### Description of Drawings

In the following the invention will be described by way of example, without limitation of the general inventive concept, on examples of embodiments with reference to the drawings.
- Figure 1: shows a first example of a light.
- Figure 2: shows a second example of a light.
- Figure 3: shows the second example of a light.
- Figure 4: shows a third example of the light.
- Figure 5: shows a fourth example of the light.
- Figure 6: shows a first and a secondary surface structure and a superposition of the surfaces.
- Figure 7: shows an example of a light,
- Figure 8: shows a further example of a light

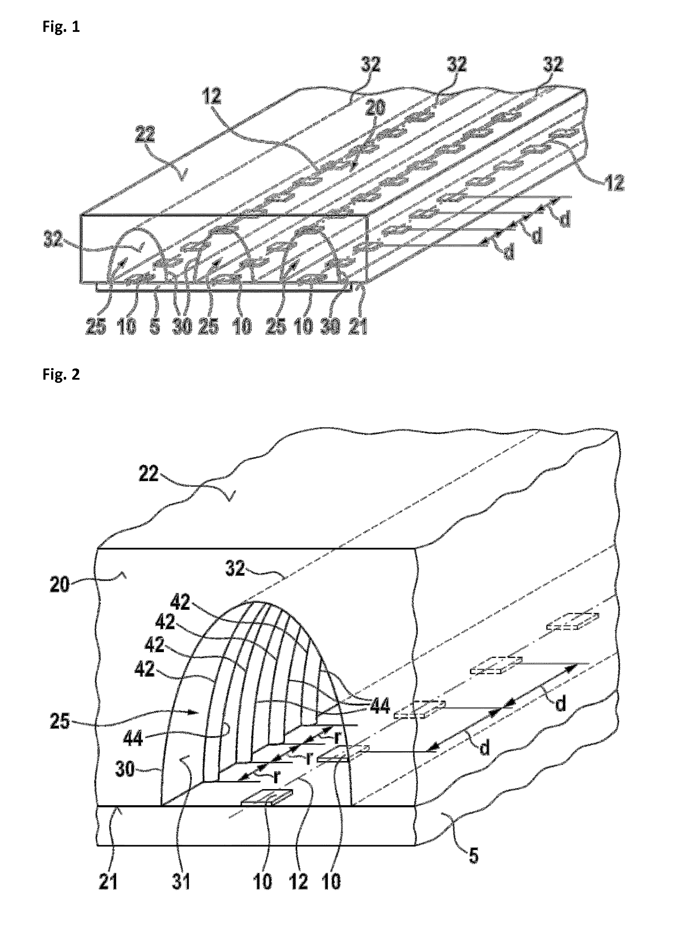

In figure 1 an example of a LED light is shown. The light 1 comprises a support 5, for example a printed circuit board supporting light sources, like LEDs 10. The LEDs 10 are arranged in rows, indicated by axes 12. The rows extend along the axes 12, i.e., the axes 12 define a longitudinal direction of the light. The support 5 and the light sources 10 are covered by an at least partially transparent front cover 20.

The front cover 20 has a support 5 facing side 21 with tunnel like columnar recesses 25 each forming a lens, as will be explained below. The opposed light exit side 22 is for example planar.

The lenses have a primary structure 30. Each primary structure 30 is set forth along the respective axis 12. The set forth primary structure 30 defines a primary surface structure 32 as indicated by dashed lines, which is translational invariant with respect to a translation along axis 12. If the cover plate 20 and/or the support expand(s) due to the heat produced by the light sources 10 when operated, the maximum absolute displacement of the light sources to the lens will take place along axes 12 at both ends of the columnar recesses 25.

If each of the LEDs 10 would be covered by a separate typical concave lens of a lens array, the LEDs at the end section of the support would be significantly displaced from their intended positions. In other words the optical axis of the LEDs would be displaced from the optical axis of the respective lens. This would result in a significant deviation from the intended light distribution. In the shown example, however, the light distribution is almost constant, as the displacement of the LEDs 10 relative to their respective lens along the axis 12 does not have an impact on the light distribution. Therefore, the temperature dependence of the function of representation of the lens has been reduced.

Fig. 2 shows a further example of a light. Again, a support 5 supports light sources 10, being arranged in a row along axis 12. A front cover 20 covers the support 5 and the light sources 10. The front cover 20 has an elongated columnar recess with a primary structure 30 set forth along axis 12 thereby forming a primary surface structure 32, as indicated by dashed lines. Superimposed on the primary surface structure are secondary structures of repeating ridges 42. The sections 31 of the primary surface structure 32 between the secondary structures 42 are invariant under a translation along axis 12, i.e. along a first direction. Ridges 42 have crests 44 in a plane perpendicular to the axis 12, thus the ridges 42 can be considered to extend perpendicular to the row of LEDs 10. The crests 44 may be mapped one on another by a translation along axis 12. This means the secondary structures form a secondary surface structure 40, which is invariant under a discontinuous translation along axis 12. The distance r between two subsequent ridges 42 is significantly smaller (preferably ≤1/3, more preferably ≤1/5, even more preferably ≤1/10) than the distance d between two subsequent light sources 10. The effect is, that an elongation of the lens along axis 12 has only a small impact on the light distribution, as only a small amount of light is refracted by the secondary structure and because the change in the distance between two subsequent structures 42 remains small, compared with the over all elongation of the lens. The patterns in the light distribution caused by the secondary structures 42 move, but remain almost undistorted.

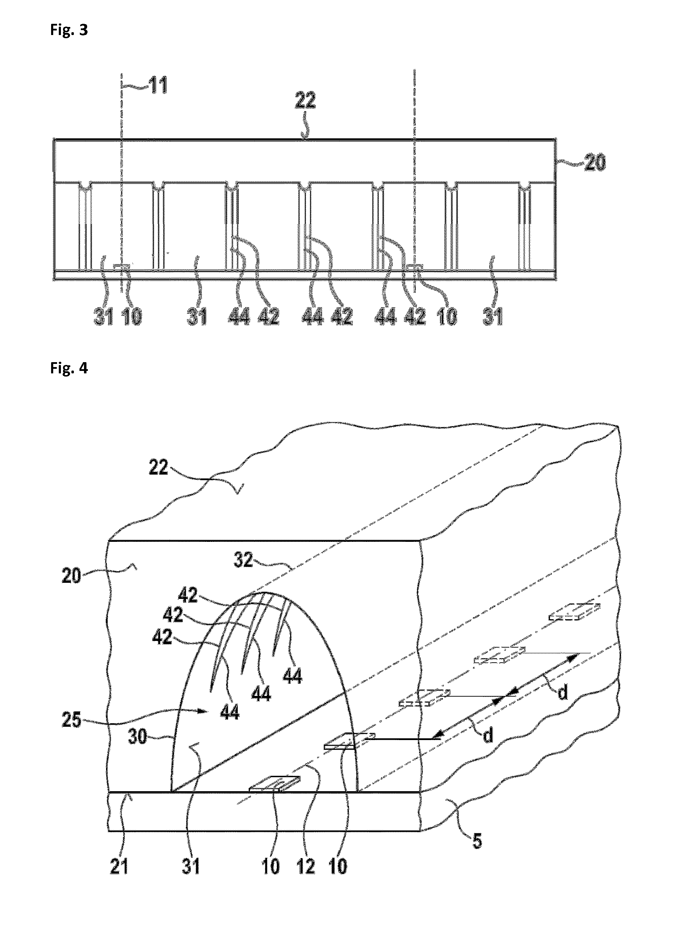

Fig. 3 shows a cross section of the light of Fig. 2 and the description of Fig. 2 is to be read on Fig. 3 as well.

Fig. 4 shows a further embodiment of a light. This embodiment differs from the example as explained with respect to Fig. 2 and Fig. 3 only in that the ridges 42 of secondary structure 40 do not extend from the plane section of the surface of the front cover 20, but are superimposed only to a part of the primary surface structure.

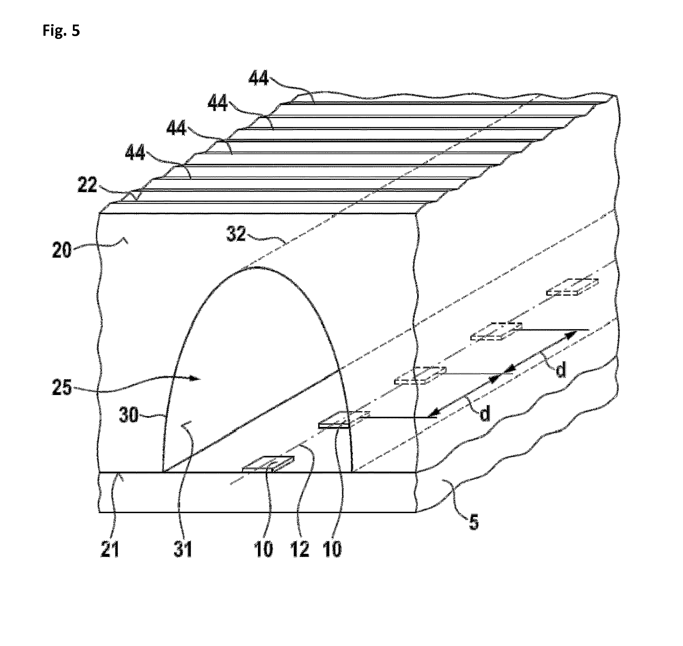

Fig. 5 shows a further embodiment of a light. This embodiment differs from the examples explained above in that the ridges 42 form a secondary surface structure 40 on the light exit side 22 of the front cover 20. Again the ridges 42 each have parallel crests 44 being orthogonal to the first direction, as indicated by the axis 12 of the row of LEDs. The primary surface structure 31 and second surface structure 40 are not merged as shown in Fig. 2 to Fig. 4, but are only "optically" superpositioned. This means that a light ray passes both surface structures and the function of representation of the lens is a superposition of the first and the secondary functions of representation.

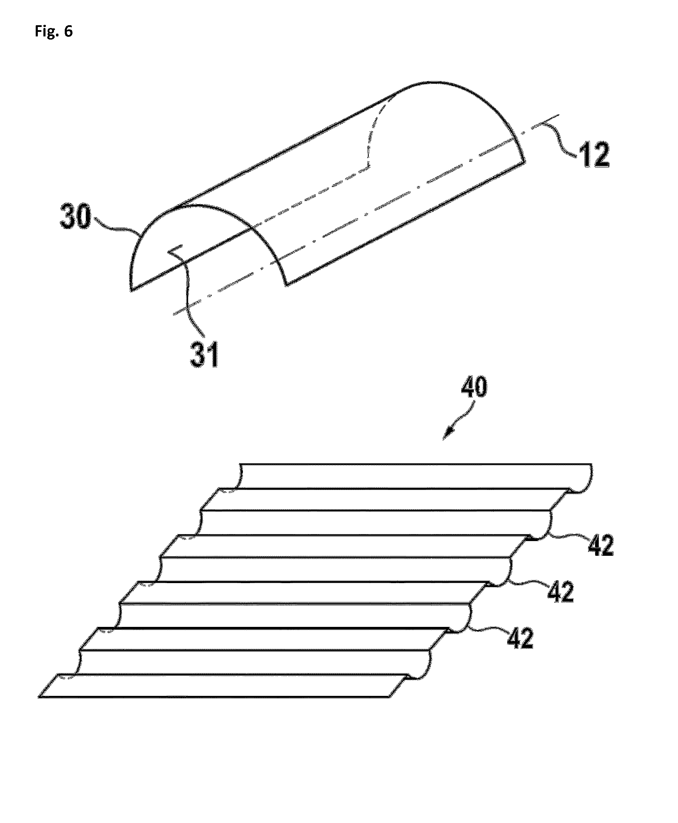

Figure 6 shows a primary surface structure 31. The primary surface structure is segment of the shell of a column. The primary surface structure can be obtained by setting forth the first structure 30 along axis 12. Figure 6 as well shows a secondary surface structure 40. The secondary surface structure 40 resembles a plane with ridges 42. The ridges 42 are parallel and spaced from each other. A superposition of the primary surface structure 31 with the secondary surface structure 40 yields the LEDs 10 facing light input side surface of the light as depicted in Fig. 2.

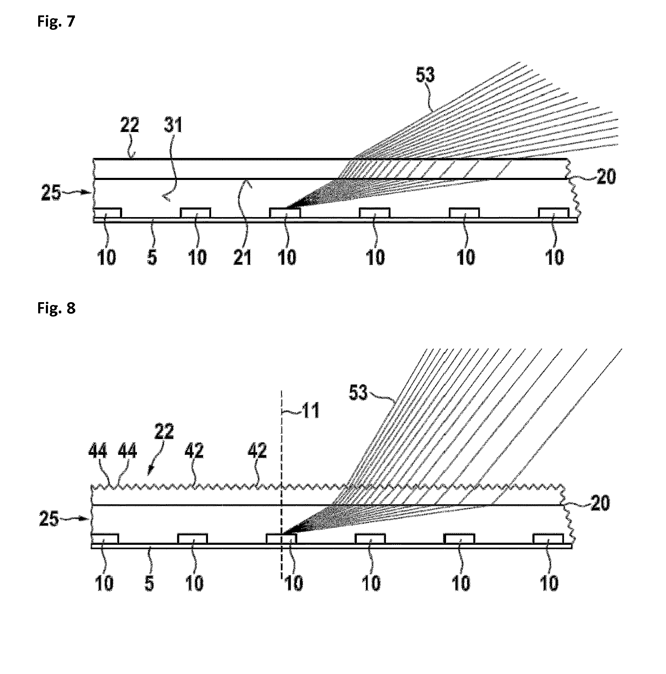

Figure 7 is a detail of a longitudinal vertical cross section along axis 12 of a light like the light in Fig. 1. The light has a couple of LEDs 10, being arranged in a row on a printed circuit board as support 5. The front cover 20 has tunnel like recess 25 spanning over the LEDs 10. The tunnel like recess has a LED facing surface with a primary surface structure 31. The primary surface structure defines the light distribution in the direction perpendicular to the section plane. In the section plane the light is emitted by the LEDs 10 as well in oblique angles, as symbolized by a couple of light beams 53. In the section plane, the LED facing surface 21 of the front cover 20 is parallel to the planar light exit surface 22 of the front cover20. Accordingly the light beams 53 exiting the front cover 20 are only parallel displaced to the respective light beam 53 before being refracted by the front cover 20.

The situation is different in Fig. 8. Fig. 8 shows as well a longitudinal vertical cross section along axis 12 of an almost identical light, that differs from the light in Fig. 7 only in that the light exit surface 22 of the front cover is not plane, but is formed by prism like ridges 42 like sketched in Fig. 5. The prisms have an isosceles triangle as base and extend orthogonal to the section plane. The cross section of the ridges is thus a triangle. The ridges have crests 44, being formed by the common edge of the outward facing sides of the triangle. Other bases are of course as well possible. As can be seen, the light beams 53 are refracted towards the optical axis 11 by the front cover 20. The glare angle of the light is thereby reduced, preferably to an angle smaller of 65°, more preferably smaller than 60°. The ridges 42 are preferably aligned one next to the other along the direction of the row of light sources 10. In the Figure 8 the ridges 42 are displayed in magnification, to better show their effect. Preferably the ridges are micro optical structures. The two upstanding legs of the triangles are preferably inclined about 45° (35°-55°) to the optical axis. The glare angle can be set according to a specification by adjusting the inclination of the legs of the triangle.

### List of reference numerals

- 5: support
- 10: light sources, e.g., LEDs
- 11: optical axis
- 12: axis /row of light sources 10
- 20: front cover
- 21: support 5 or LED facing side of front cover, respectively
- 22: light exit surface of front cover
- 25: recess
- 30: primary structure
- 31: primary surface structure
- 32: primary surface structure
- 40: secondary surface structure
- 42: ridge
- 44: crest of secondary surface structure
- 53: light beam
- d: distance between subsequent light sources 10 (may vary or be constant)
- r: distance between subsequent ridges 42 (may vary or be constant)

## Claims

1. A lamp with
- at least one support (5) for at least one row (12) of light sources (10) emitting a multitude of rays of light (51, 52) and
- a front cover (20) in front of the light sources (10), the front cover comprising at least one lens,
wherein the lens comprises at least one primary surface structure (31, 32) extending parallel to the row (12) of light sources (10) and at least one secondary surface structure (40) comprising a plurality of parallel ridges (42) **characterized in that**,
the secondary surface structure is superimposed to the primary surface structure.

2. The lamp of claim 1,
**characterized in that**
at least a mean distance (r) between crests of neighbored ridges (42) is smaller than at least a mean distance (d) between neighbored light sources (10).

3. The lamp of claim 1 or 2,
**characterized in that**
the primary surface structure (31, 32) is a column like recess (25) in the light sources (10) facing surface of the front cover (20).

4. The lamp of claim 3,
**characterized in that**
the column like recess (25) encloses at least a section of the row of light sources (10) at least partially.

5. The lamp of one of the preceding claims,
**characterized in that**
the lens has at least one incoupling and /or outcoupling surface for coupling light in and/or out of the lens, wherein the incoupling and/or outcoupling surface is a linear combination of the primary surface structure (31,32) and the secondary surface structure (42).

6. The lamp of one of the preceding claims,
**characterized in that**
at least a section (31) of the surface of the primary surface structure (31, 32) is invariant under a continuous translation parallel to the row (12) of light sources (10).

7. The lamp of one of the preceding claims,
**characterized in that** ridges (42) are invariant under a discontinuous translation of the ridges (42) parallel to the row (12) of light sources (10).

8. The light of one of the preceding claims,
**characterized in that**
the front cover (20) has a light exit surface which comprises at least one plane segment.

## Amended claims

### Amended claims in accordance with Rule 137(2) EPC.

**1.** A lamp with
- at least one support (5) for at least one row (12) of light sources (10) emitting a multitude of rays of light (51, 52) and
- a front cover (20) in front of the light sources (10), the front cover comprising at least one lens,
wherein the lens is formed in the front cover by at least one primary surface structure (31, 32) extending parallel to the row (12) of light sources (10) and at least one secondary surface structure (40) comprising a plurality of parallel ridges (42) **characterized in that**,
the secondary surface structure is superimposed to the primary surface structure.

**2.** The lamp of claim 1,
**characterized in that**
at least a mean distance (r) between crests of neighbored ridges (42) is smaller than at least a mean distance (d) between neighbored light sources (10).

**3.** The lamp of claim 1 or 2,
**characterized in that**
the primary surface structure (31, 32) is a column like recess (25) in the light sources (10) facing surface of the front cover (20).

**4.** The lamp of claim 3,
**characterized in that**
the column like recess (25) encloses at least a section of the row of light sources (10) at least partially.

**5.** The lamp of one of the preceding claims,
**characterized in that**
the lens has at least one incoupling and /or outcoupling surface for coupling light in and/or out of the lens, wherein the incoupling and/or outcoupling surface is a linear combination of the primary surface structure (31,32) and the secondary surface structure (42).

**6.** The lamp of one of the preceding claims,
**characterized in that**
at least a section (31) of the surface of the primary surface structure (31, 32) is invariant under a continuous translation parallel to the row (12) of light sources (10).

**7.** The lamp of one of the preceding claims,
**characterized in that** ridges (42) are invariant under a discontinuous translation of the ridges (42) parallel to the row (12) of light sources (10).

**8.** The light of one of the preceding claims,
**characterized in that**
the front cover (20) has a light exit surface which comprises at least one plane segment.
